# EUROPEAN PATENT SPECIFICATION

(11) **EP 3 747 560 B1**
(45) Date of publication and mention of the grant of the patent: **06.04.2022**
(21) Application number: 19744356.7
(22) Date of filing: 16.01.2019
(51) Int. Cl.: B08B 9/08, B08B 9/093, B01D 53/14, B08B 3/02

(54) **DEVICE AND METHOD FOR THE PRE-DEGASSING OF A FUEL TANK**
VORRICHTUNG UND VERFAHREN ZUR VORENTGASUNG EINES KRAFTSTOFFTANKS
DISPOSITIF ET PROCÉDÉ DE PRÉ-DÉGAZAGE D'UN RÉSERVOIR DE COMBUSTIBLE

(30) Priority: 29.01.2018 ES 201830075
(43) Date of publication of application: 09.12.2020
(73) Proprietor: Albemarna, S.L., 46260 Alberic (Valencia) (ES)
(72) Inventor: MARTÍNEZ NAVARRETE, Antonio, 46260 Alberic (Valencia) (ES); MARTÍNEZ NAVARRETE, Rafael, 46260 Alberic (Valencia) (ES); MARTÍNEZ NAVARRETE, Maximino, 46260 Alberic (Valencia) (ES)
(74) Representative: Ungria López, Javier
(86) International application number: PCT/ES2019/070021
(87) International publication number: WO 2019/145587

(56) References cited:
- EP-A1- 1 787 708
- WO-A1-2011/145122
- WO-A2-2006/083942
- CN-U- 205 518 885
- US-A1- 2010 254 874

## Description

### Object of the invention

The present invention relates to a device and a method for the pre-degassing of fuel tanks, in order to ensure that a fuel tank is free of explosive and/or toxic fumes prior to the performance of maintenance, repair or cleaning tasks by an operator.

The pre-degassing, as far as the present invention is concerned, is understood as an additional task prior to the conventional degassing performed in a tank.

The objective of conventional degassing is to ensure that the fuel tank is free of explosive and/or toxic fumes prior to the performance of maintenance, repair or cleaning tasks by an operator. Conventional degassing involves opening the hatch (or manhole) of the fuel tank.

In turn, the pre-degassing, as far as the present invention is concerned, is a treatment or process prior to conventional degassing, which is intended to increase the safety of both the maintenance operations and the conventional degassing operation itself.

The device and method for the pre-degassing or a fuel tank object of the present invention is applicable to the field of industry dedicated to the storage, transport and supply of fuels.

### Technical problem to be resolved and Background of the invention

Fuel storage tanks must be periodically checked up to verify the structural integrity thereof, to carry out fuel cleaning tasks and to perform repairs and replacements of the fuel to be stored.

Fuel storage tanks normally comprise a hatch or manhole that covers a hollow in the wall of the tank with sufficiently large dimensions as to allow the passage of an operator inside the tank, in order to carry out the mentioned tasks.

Said manhole is secured to the wall of the tank by means of a set of screws and bolts, and a set of hinges. All these elements are designed and sized to withstand the pressures of fuel storage, and to maintain the structural integrity thereof against the corrosive action that gases or fluids stored inside the tank could have on said elements. Furthermore, the manhole is conventionally equipped with one or more sealing gaskets, which intend to ensure that the flammable fumes inside the tank do not leak to the outside thereof. Moreover, the manhole is usually equipped with one or more nozzles for filling/emptying (with their corresponding snap fits), designed for performing the filling operations of the tank and for connecting the pipes that carry the fuel to the different dispensers.

When the intention is to carry out the cited operations of maintenance, repair, cleaning, etc., by an operator, it is of vital importance to ensure that there are no traces of flammable fumes inside the tank that could cause deflagration during said maintenance operation due to a sudden increase in the temperature and/or to the generation of any spark.

For this reason, it is important that the tools to be used by the operator do not create sparks, and that the equipment provided to the operator to carry out their task has the same electric potential as the walls of the tank, to ensure that no electric shock is created due to the static electricity that the involved elements (tank and operator equipment) could accumulate. In this regard, a possible safety measure consists of connecting to ground by means of a wire both the walls of the tank and the operator equipment itself.

One particularly risky moment in the maintenance tasks that an operator must carry out is the moment of opening the hatch or manhole. If taking into consideration that, due to the possible deterioration of the sealing gaskets, there may be flammable fumes coming from the inside of the tank to the outside thereof, the opening of the manhole must be carried out with extreme caution, to prevent a spark from triggering a deflagration with fatal consequences.

In order to prevent, as much as possible, a situation such as the one described above, some methods are known in the state of the art for degassing a fuel tank prior to the maintenance tasks.

One of said methods is described in document ES 2301308 A1, of the same holder as the present Spanish Patent application. This document describes a method for the degassing of fuel tanks that entails injecting, by means of a pump, a dispersion of atomized water droplets for retaining the flammable volatile fuel components.

In the background section of the document mentioned in the previous paragraph, the existence of other methods for the degassing of fuel tanks are mentioned, wherein said methods comprise, either the suction of the volatile components by means of suction equipment, or the insufflation of pressurized air inside said tanks, wherein said introduced pressurized air pushes the flammable fumes inside the tank towards filter equipment that retains the volatile components and allows the filtered air to pass to the outside atmosphere.

One of the problems presented by conventional degassing methods such as those described in document ES 2301308 A1 is that said methods conventionally entail having to open the manhole of the tank to connect a cover equipped with mouths that connect to hoses which, in turn, connect to the air supply pump. In order to carry out this task, it is necessary to use tools for the opening of the manhole, with the subsequent risk of deflagration mentioned above.

Likewise, in the method for degassing mentioned above, which entails the introduction of pressurized air to push the flammable fumes towards filtering means, it has been verified that there is a problem associated with the same, consisting of the heating up experienced by the filter equipment due to the adsorption by the filter (made of, for example, active carbon) of the volatile fumes or components. This adsorption is an exothermic process which, as mentioned, causes the filter equipment to be heated. Moreover, the heating of the filter equipment has two negative consequences, namely: the increase in the risk of combustion of flammable fumes; and, the loss of efficiency of the filter as the temperature thereof increases, a fact that can lead to the filter being rendered useless, with the subsequent risk that it entails.

Document CN 205518885 U describes a compressed air jet purging system with multidirectional high pressure nozzle. The system includes compressed air efflux cleaning system, residue raffinate recycling processed system, and waste gas waste residue recycling processed system. The compressed air efflux cleaning system utilizes the high pressure draught as cleaning medium, sweeps the cleanness through bellows and multidirectional high pressure nozzle to tank car inside, residue raffinate recycling processed system is used for relict sediment liquid in the collection tank; the waste gas and waste recovery treatment system consists of an axial flow fan and subsequent treatment sections , the exhaust gas and slag that have been purged inside are discharged from the tank car.

Document WO 2011145122 A1 discloses a method for degassing a storage tank for liquid products containing Volatile Organic Compounds (VOC) comprising a step of introducing an aqueous mixture comprising substances able to interact chemically and/or physically with the VOC in the gaseous state inside the tank, which is kept closed, so as to encourage them to pass from the gaseous phase to the liquid phase, and to remain in the liquid phase. Such introduction step being protracted so as to reduce the concentration of the VOC to a predetermined value functional to having an acceptable explosive limit.

### Description of the invention

With the intention of providing a solution to the problems mentioned above, the following device and method for the pre-degassing of a fuel tank is disclosed.

The device and the method for the pre-degassing object of the present invention are designed to carry out prior additional degassing (pre-degassing) to conventional degassing which entails the opening of the manhole (or hatch) of a fuel tank for replacement thereof with a cover with mouths for air insufflation and dirty air collecting hoses.

The device for the pre-degassing of a fuel tank object of the invention includes an air pump (or compressor), an insufflation pipe of said air to a fuel tank, wherein said insufflation pipe is connected to the pump and is designed to connect to a first nozzle for filling the tank.

The device further includes a collector pipe connected to a filter equipment. The collector pipe is designed to connect to a second nozzle for emptying the fuel tank.

Both the first nozzle and the second nozzle of the tank are conventional nozzles of said tank, different to the manhole of the tank and placed in a location different to that of the manhole or, in any case, placed occupying a portion of the section of said manhole, such that it is not necessary to open and close the manhole in order to open or close the first nozzle and the second nozzle (thus preventing the aforementioned problems). Typically, the first nozzle and the second nozzle are conventional nozzles of the tank for connecting the pipes that carry the fuel to the dispensers. For this reason, they have been previously called filling/emptying nozzles.

The device is designed for driving, by means of the pump, an air stream through the insufflation pipe towards the fuel tank.

Moreover, the device is designed to drive (by means of the increase in pressure caused by the pump inside the tank) an air stream mixed with inner gases of the tank, through the collector pipe towards the filter equipment.

The device is equally designed to expel, through an exhaust route of the filter equipment, a filtered clean air flow towards the atmosphere.

The filter equipment includes at least one filter designed to carry out an adsorption of flammable volatile particles of the gases inside the tank. The filter can be made of active carbon.

According to the invention, the device for the pre-degassing of a tank object of the present invention incorporates a cooling pipe connected to the pump and to an inlet nozzle of the filter equipment.

In this way, the device is designed to drive, by means of the pump and through the cooling pipe, a cooling air stream towards the filter equipment. In this way, the operating temperature of the filter (or filters) of the filter equipment is reduced and/or maintained under control, thus improving the filtering efficiency with respect to other conventional degassing systems and preventing the risk of igniting the air flow with flammable volatile particles.

Preferably, the device includes a monitoring and control module designed to control the air stream carried through the insufflation pipe and through the cooling pipe.

Also preferably, the device incorporates at least one first volatile particle concentration meter. This first meter is located in the filter equipment, on the side corresponding to the exhaust route of the filter equipment.

The first concentration meter is connected to the monitoring and control module, such that the monitoring and control module is designed to monitor the concentration of volatile particles in the air flow exiting through the exhaust route of the filter equipment. In this way, the quality of the air being expelled into the atmosphere from the filter equipment is controlled.

According to a preferred embodiment of the device, this includes at least a second volatile particle concentration meter. This second meter is located in the filter equipment, on the side corresponding to the inlet nozzle of the filter equipment.

The second concentration meter is connected to the monitoring and control module, such that the monitoring and control module is designed to monitor the concentration of volatile particles of the dirty air stream reaching the filter equipment through the collector pipe.

Preferably, the monitoring and control module is designed to stop the operation of the device when it detects that the concentration of volatile particles measured by the second concentration meter drops below a predetermined concentration threshold. In this case, the tank is considered to have been successfully pre-degassed.

Preferably, the monitoring and control module is designed to evaluate the efficiency of the filter equipment based on the difference between the concentrations of volatile particles measured by the first concentration meter and the second concentration meter.

Also according to a preferred embodiment, the device includes at least one temperature sensor, connected to the filter equipment and to the monitoring and control module. In this way, the monitoring and control module is arranged to monitor the temperature of the at least one filter based on the measurements made by the at least one temperature sensor.

According to a possible embodiment of the device, the monitoring and control module is designed to increase/decrease the cooling air stream based on the temperature measured by the at least one temperature sensor.

Furthermore, according to a possible embodiment, the monitoring and control module is designed to control, by means of a cooling system (for example, a coil circuit that the cooling fluid is made to pass through), the temperature of the cooling air stream based on the temperature measured by the at least one temperature sensor.

According to a possible embodiment, the monitoring and control module is designed to activate the emission of a visual and/or sound alarm if it detects that the temperature of the filter equipment rises above a predetermined temperature threshold.

Preferably, the section of the cooling pipe is at least double the section of the insufflation pipe.

According to a specific embodiment, the section of the cooling pipe is triple the section of the insufflation pipe.

According to an embodiment of the device, this is designed so that the total air stream supplied by the pump to the set of the insufflating and cooling pipes is of 2,400 m³/h. This stream guarantees (for most conventional fuel tanks) that the pre-degassing is completed in a few minutes.

As mentioned, the present invention also relates to a method for the pre-degassing of a fuel tank.

The method for the pre-degassing of a fuel tank object of the present invention comprises:
- Insufflating, by means of a pump (or compressor) and through an insufflation pipe connected to the pump and to a first nozzle for filling a fuel tank, an air flow inside the tank.

The insufflated air flow pushes (due to the increase in pressure inside the tank caused by the action of the pump) the inner gases of the tank towards a second nozzle for emptying the tank to which a collector pipe is connected. Thus, a dirty air stream (air mixed with the inner gases of the tank), which is pushed, is formed by the driving force of the pump and through the collector pipe, towards a filter equipment. This filter equipment incorporates at least one filter for the adsorption of volatile fuel particles. This filter can be made of active carbon.

Both the first nozzle and the second nozzle of the tank are conventional nozzles of said tank, different to the manhole of the tank and placed in a location different to that of the manhole or, in any case, placed occupying a portion of the section of said manhole, such that it is not necessary to open and close the manhole in order to open or close the first nozzle and the second nozzle (thus preventing the aforementioned problems). Typically, the first nozzle and the second nozzle are conventional nozzles of the tank for connecting the pipes that carry the fuel to the dispensers.
- Filtering the dirty air stream in the filter equipment.
- Expelling a clean air flow through an exhaust route of the filter equipment;
- Circulating, by means of the pump, a cooling air stream towards the filter equipment to maintain the temperature of the at least one filter below a determined temperature threshold.

Likewise, preferably, the method comprises:
- Monitoring, by means of a monitoring and control module associated with volatile particle concentration meters, the concentration of volatile fuel particles present in the dirty air stream and in the clean air flow of the filter equipment.
- Monitoring, by means of the monitoring and control module (with which at least one temperature sensor is associated), the temperature of the at least one filter.
- Commanding, by means of the monitoring and control module, the interruption of the pre-degassing of the tank, when it is determined that the concentration of volatile particles in the dirty air stream drops below a predetermined concentration threshold.
- Controlling, by means of the monitoring and control module, the cooling air stream, based on the temperature of the at least one filter measured by the at least one sensor.

### Brief description of the figures

As a part of the explanation of at least one preferred embodiment of the device for the pre-degassing of a fuel tank, the following figure has been included, which by way of illustration and not limitation represents the following.

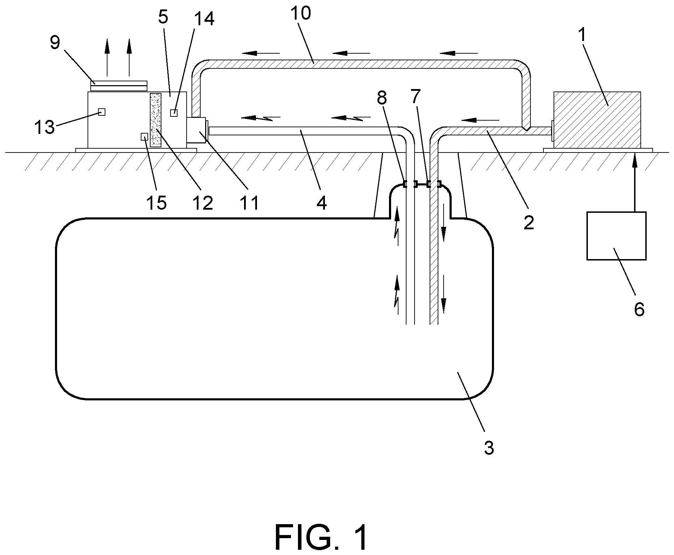

Figure 1 shows a simplified schematic representation of an embodiment of the device for the pre-degassing of a fuel tank object of the present invention.

### Detailed description

The present invention relates, as mentioned previously, to a device and a method for the pre-degassing of a fuel tank.

The device is made up of an air pump (1), an insufflation pipe (2) of air into a tank (3), a collector pipe (4) of dirty air with flammable fumes, filter equipment (5) and a monitoring and control module (6).

The device is designed to inject, through a first nozzle (7) of a fuel tank (3), a pressurized air flow. Said flow is captured in a pump (1) or compressor and is carried to the first nozzle (7) of the tank (3) by means of the insufflation pipe (2).

By insufflating the air flow, the pressure inside the tank (3) is increased. The air flow introduced pushes the inner gases of the tank (3) (with the volatile fuel particles that said gases could contain) and carries them to a second nozzle (8) of the tank (3), to which the collector pipe (4) is connected.

The dirty air (represented by a broken arrow in Figure 1) is carried through the collector pipe (4) to the filter equipment (5), wherein the filtering of the dirty air stream takes place.

The filter equipment (5) incorporates one or more filters (12) of a material with a high adsorption capacity, for example active carbon.

The filter equipment (5) retains the flammable hydrocarbon volatile particles and allows a filtered and clean air flow to exit into the atmosphere, through an exhaust route (9).

The device of the invention incorporates a cooling pipe (10), through which a clean and pressurized air flow is led towards the filter equipment (5), coming directly from the pump (1). Said cooling pipe (10) connects to the filter equipment (5) by means of an inlet nozzle (11) of said filter equipment (5).

The inlet nozzle (11) connects the inlets of the cooling pipe (10) and of the collector pipe (4), such that the cooling air and dirty air flows mix prior to the passage thereof through the filter (12) or filters of the filter equipment (5).

As the cooling air and dirty air flows mix, the resulting flow that passes through the filter equipment (5) has a lower temperature than it would in the absence of the cooling air. This results in a limitation of the working temperature of the filter (12) or filters of the filter equipment (5), which in turn causes a higher efficiency in the filtering process (preventing the filters (12) from being disabled) and a prevention of possible combustion reactions which could take place in the filter equipment (5) in the event that the temperature would rise above a determined threshold.

The device of the invention incorporates volatile particle concentration meters (13, 14) on one and the other side of the filter (12) (or filters) of the filter equipment (5).

There is at least a first volatile particle concentration meter (13) on the side corresponding to the exhaust route (9) of the filter equipment (5).

Likewise, there is at least a second volatile particle concentration meter (14) (explosimeter) on the side corresponding to the inlet nozzle (11) of the filter equipment (5).

By means of the monitoring and control module (6) of the device object of the present invention, to which the volatile particle concentration meters (13, 14) are connected, the hydrocarbon volatile particle concentration is controlled, both in the dirty air stream that enters the filter equipment (5), as in the clean air flow that exits through the exhaust route (9) of the filter equipment (5).

By means of controlling the concentration measured by the first meter (13), it can be known whether the air being released into the atmosphere has a zero or very low concentration (below a determined healthy threshold) of hydrocarbon volatile particles.

By means of controlling the concentration measured by the second meter (14), it can be known whether the volatile particle concentration inside the tank (3) has dropped below a determined safety level, moment at which the process of degassing the tank (3) can be stopped.

Preferably, in order to estimate the concentration of flammable volatile particles inside the tank (3), the monitoring and control module (6) is designed to perform a correction of the particle concentration measured by the second meter (14), taking into consideration that the concentration measured by said second meter (14) will be lower than the real particle concentration inside the tank (3), given the mix of the dirty air and cooling air flows which takes place in the filter equipment (5).

Furthermore, by means of the comparison of the concentrations measured by the concentration meters (13, 14) placed on the side of the exhaust route (9) and on the side of the inlet nozzle (11), the level of efficiency of the filter equipment (5) can be determined.

Preferably, the device of the invention further incorporates at least one temperature sensor (15), connected to the filter equipment (5) (i.e., connected directly to the filter (12) and to the monitoring and control module (6), and designed to measure the temperature of the filter (12) or filters of the filter equipment (5).

By means of the temperature control of the filter (12) or filters of said filter equipment (5), it can be determined if the cooling air stream has to be increased/reduced, if the temperature of the cooling air has to be reduced by means of an additional cooling system and/or if a visual or sound alarm must be issued due to high temperature in the filter equipment (5).

Optionally, the monitoring and control module (6) is further designed to activate the emission of a visual and/or sound alarm if it detects that the volatile particle concentration measured by the first meter (13) and/or the volatile particle concentration measured by the second meter (14) rises respectively above predetermined concentration limits.

All the concentration and temperature controls previously mentioned are carried out by the monitoring and control module (6).

According to a possible embodiment of the device for the pre-degassing of a fuel tank (3), the section of the cooling pipe (10) is at least double the section of the insufflation pipe (2). According to another possible embodiment of the device, the section of the cooling pipe (10) is triple the section of the insufflation pipe (2).

According to a possible embodiment of the device, the total air stream supplied by the pump (1) to the set of the insufflating (2) and cooling (10) pipes is of 2,400 m³/h. It is estimated that with this stream a conventional fuel tank (3) can be de-gassed in a matter of minutes (typically between 15 and 30 minutes).

## Claims

1. A device for the pre-degassing of a fuel tank, comprising an air pump (1), an insufflation pipe (2) connected to the pump (1), and a collector pipe (4) connected to a filter (5), wherein the device is designed to drive, by means of the pump (1), an air stream through the insufflation pipe (2) towards a fuel tank (3), and an air stream mixed with inner gases of the tank (3), through the collector pipe (4), towards the filter equipment (5), wherein the device is further designed to expel, through an exhaust route (9) of the filter equipment (5), a filtered clean air flow, wherein the filter equipment (5) comprises at least one filter (12) designed to carry out an adsorption of flammable volatile particles of
the inner gases of the tank (3), wherein the device is designed to connect the insufflation pipe (2) to a first nozzle (7) for filling the tank (3) and to connect the collector pipe (4) to a second nozzle (8) for emptying the tank (3); and **characterized in that** the device comprises a cooling pipe (10) connected to the pump (1) and to an inlet nozzle (11) of the filter equipment (5), and wherein the device is designed to drive, by means of the pump (1) and through the cooling pipe (10), a cooling air stream towards the filter equipment (5).

2. The device for the pre-degassing of a fuel tank, according to claim 1, **characterized in that** it comprises a monitoring and control module (6) designed to control the air stream carried through the insufflation pipe (2) and through the cooling pipe (10).

3. The device for the pre-degassing of a fuel tank, according to claim 2, **characterized in that** it comprises at least a first volatile particle concentration meter (13), wherein said first meter (13) is located in the filter equipment (5) on the side corresponding to the exhaust route (9) of the filter equipment (5), and wherein said first meter (13) is connected to the monitoring and control module (6), such that the monitoring and control module (6) is designed to monitor the volatile particle concentration of the air flow exiting through the exhaust route (9) of the filter equipment (5).

4. The device for the pre-degassing of a fuel tank, according to claim 2, **characterized in that** it comprises at least a second volatile particle concentration meter (14), wherein said second meter (14) is located in the filter equipment (5) on the side corresponding to the inlet nozzle (11) of the filter equipment (5), and wherein said second meter (14) is connected to the monitoring and control module (6), such that the monitoring and control module (6) is designed to monitor the volatile particle concentration of the dirty air stream reaching the filter equipment (5) through the collector pipe (4).

5. The device for the pre-degassing of a fuel tank, according to claim 4, **characterized in that** the monitoring and control module (6) is designed to stop the operation of the device when it detects that the concentration of volatile particles measured by the second concentration meter (14) drops below a predetermined concentration threshold.

6. The device for the pre-degassing of a fuel tank according to claims 3 and 4, **characterized in that** the monitoring and control module (6) is designed to evaluate the efficiency of the filter equipment (5) based on the difference between the concentrations of volatile particles measured by the first meter (13) and the second meter (14).

7. The device for the pre-degassing of a fuel tank according to claim 2, **characterized in that** it comprises at least one temperature sensor (15), connected to the filter equipment (5) and to the monitoring and control module (6), wherein the monitoring and control module (6) is designed to monitor the temperature of the at least one filter (12) based on the measurements made by the at least one temperature sensor (15).

8. The device for the pre-degassing of a fuel tank according to claim 7, **characterized in that** the monitoring and control module (6) is designed to increase/decrease the cooling air stream based on the temperature measured by the at least one temperature sensor (15).

9. The device for the pre-degassing of a fuel tank according to any of claims 7 or 8, **characterized in that** the monitoring and control module (6) is designed to control, by means of a cooling system, the temperature of the cooling air stream based on the temperature measured by the at least one temperature sensor (15).

10. The device for the pre-degassing of a fuel tank according to any of claims 7 to 9, **characterized in that** the monitoring and control module (6) is designed to activate the emission of a visual and/or sound alarm if it detects that the temperature of the filter equipment (5) rises above a predetermined temperature threshold.

11. The device for the pre-degassing of a fuel tank according to any of the preceding claims, **characterized in that** the section of the cooling pipe (10) is at least double the section of the insufflation pipe (2).

12. The device for the pre-degassing of a fuel tank according to any of the preceding claims, **characterized in that** the section of the cooling pipe (10) is triple the section of the insufflation pipe (2).

13. The device for the pre-degassing of a fuel tank according to any of the preceding claims, **characterized in that** it is designed for the total air stream supplied by the pump (1) to the set of the insufflating (2) and cooling (10) pipes to be of 2,400 m³/h.

14. A method for the pre-degassing of a fuel tank with a device according to any preceding claims **characterized in that** it comprises:
- insufflating, by means of a pump (1) and through an insufflation pipe (2) connected to a first nozzle (7) for filling a fuel tank (3), an air stream inside the tank (3), such that the insufflated air stream pushes the inner gases of the tank (3) towards a second nozzle (8) for emptying the tank (3), thus forming a dirty air stream that is pushed by the driving force of the pump (1) and through a collector pipe (4) towards a filter equipment (5) incorporating at least one filter (12) for the adsorption of volatile fuel particles;
- filtering the dirty air stream in the filter equipment (5);
- expelling a clean air flow through an exhaust route (9) of the filter equipment;
- circulating, by means of the pump (1), a cooling air stream towards the filter equipment (5) to maintain the temperature of the at least one filter (12) below a determined temperature threshold.

15. The method for the pre-degassing of a fuel tank according to claim 14, **characterized in that** it comprises:
- monitoring, by means of a monitoring and control module (6) associated with volatile particle concentration meters (13, 14), the concentration of volatile fuel particles present in the dirty air stream and in the clean air flow of the filter equipment (5);
- monitoring, by means of the monitoring and control module (6) associated with the at least one temperature sensor (15), the temperature of the at least one filter (12);
- commanding, by means of the monitoring and control module (6), the interruption of the degassing of the tank, when it is determined that the concentration of volatile particles in the dirty air stream drops below a predetermined concentration threshold, and;
- controlling, by means of the monitoring and control module (6), the cooling air stream, based on the temperature of the at least one filter (12) measured by the at least one sensor (15).

## Patentansprüche

1. Vorrichtung für das Vorentgasen eines Kraftstofftanks, die umfasst:
eine Luftpumpe (1), ein Einblasrohr (2), das mit der Pumpe (1) verbunden ist, sowie ein Sammelrohr (4), das mit einem Filter (5) verbunden ist, wobei die Vorrichtung so ausgelegt ist,
dass sie mittels der Pumpe (1) einen Luftstrom über das Einblasrohr (2) in Richtung eines Kraftstofftanks (3) und einen mit inneren Gasen des Tanks (3) gemischten Luftstrom über das Sammelrohr (4) in Richtung der Filtereinrichtung (5) treibt, die Vorrichtung des Weiteren so ausgelegt ist, dass sie über einen Ausströmweg (9) der Filtereinrichtung (5) einen gefilterten sauberen Luftstrom ausstößt, und die Filtereinrichtung (5) wenigstens einen Filter (12) umfasst,
der so ausgelegt ist, dass er eine Adsorption entflammbarer flüchtiger Partikel der inneren Gase des Tanks (3) ausführt, wobei die Vorrichtung so ausgelegt ist, dass sie das Einblasrohr (2) mit einem ersten Stutzen (7) zum Füllen des Tanks (3) verbindet und das Sammelrohr (4) mit einem zweiten Stutzen (8) zum Entleeren des Tanks (3) verbindet; und **dadurch gekennzeichnet,**
**dass** die Vorrichtung ein Kühlrohr (10) umfasst, das mit der Pumpe (1) sowie mit einem Eintrittsstutzen (11) der Filtereinrichtung (5) verbunden ist, und wobei die Vorrichtung so ausgelegt ist, dass sie mittels der Pumpe (1) und über das Kühlrohr (10) einen kühlenden Luftstrom in Richtung der Filtereinrichtung (5) treibt.

2. Vorrichtung für das Vorentgasen eines Kraftstofftanks nach Anspruch 1,
**dadurch gekennzeichnet, dass** sie ein Überwachungs-und-Steuerungs-Modul (6) umfasst, das so ausgelegt ist, dass es den durch das Einblasrohr (2) und durch das Kühlrohr (10) geleiteten Luftstrom steuert.

3. Vorrichtung für das Vorentgasen eines Kraftstofftanks nach Anspruch 2,
**dadurch gekennzeichnet, dass** sie wenigstens eine erste Messeinrichtung (13) für die Konzentration flüchtiger Partikel umfasst, wobei die erste Messeinrichtung (13) in der Filtereinrichtung (5) an der Seite angeordnet ist, die dem Ausströmweg (9) der Filtereinrichtung (5) entspricht, und die erste Messeinrichtung (13) so mit dem Überwachungs-und-Steuerungs-Modul (6) verbunden ist, dass das Überwachungs-und-Steuerungs-Modul (6) zum Überwachen der Konzentration flüchtiger Partikel des über den Ausströmweg (9) der Filtereinrichtung (5) austretenden Luftstroms ausgelegt ist.

4. Vorrichtung für das Vorentgasen eines Kraftstofftanks nach Anspruch 2,
**dadurch gekennzeichnet, dass** sie wenigstens eine zweite Messeinrichtung (14) für die Konzentration flüchtiger Partikel umfasst, wobei die zweite Messeinrichtung (14) in der Filtereinrichtung (5) an der Seite angeordnet ist, die dem Eintrittsstutzen (11) der Filtereinrichtung (5) entspricht, und die zweite Messeinrichtung (14) so mit dem Überwachungs-und-Steuerungs-Modul (6) verbunden ist, dass das Überwachungs-und-Steuerungs-Modul (6) zum Überwachen der Konzentration flüchtiger Partikel des über das Sammelrohr (4) zu der Filtereinrichtung (5) gelangenden verunreinigten Luftstroms ausgelegt ist.

5. Vorrichtung für das Vorentgasen eines Kraftstofftanks nach Anspruch 4,
**dadurch gekennzeichnet, dass** das Überwachungs-und-Steuerungs-Modul (6) so ausgelegt ist, dass es den Betrieb der Vorrichtung unterbricht, wenn es erfasst, dass die von der zweiten Konzentrations-Messeinrichtung (14) gemessene Konzentration flüchtiger Partikel unter einen vorgegebenen Konzentrations-Schwellenwert fällt.

6. Vorrichtung für das Vorentgasen eines Kraftstofftanks nach den Ansprüchen 3 und 4, **dadurch gekennzeichnet, dass** das Überwachungs-und-Steuerungs-Modul (6) so ausgelegt ist, dass es die Effizienz der Filtereinrichtung (5) auf Basis der Differenz zwischen den von der ersten Messeinrichtung (13) und der zweiten Messeinrichtung (14) gemessenen Konzentrationen flüchtiger Partikel bewertet.

7. Vorrichtung für das Vorentgasen eines Kraftstofftanks nach Anspruch 2,
**dadurch gekennzeichnet, dass** sie wenigstens einen Temperatursensor (15) umfasst, der mit der Filtereinrichtung (5) sowie mit dem Überwachungs-und-Steuerungs-Modul (6) verbunden ist, wobei das Überwachungs-und-Steuerungs-Modul (6) so ausgelegt ist, dass es die Temperatur des wenigstens einen Filters (12) auf Basis der von dem wenigstens einen Temperatursensor (15) vorgenommenen Messungen überwacht.

8. Vorrichtung für das Vorentgasen eines Kraftstofftanks nach Anspruch 7,
**dadurch gekennzeichnet, dass** das Überwachungs-und-Steuerungs-Modul (6) so ausgelegt ist, dass es den kühlenden Luftstrom auf Basis der von dem wenigstens einen Temperatursensor (15) gemessenen Temperatur verstärkt/verringert.

9. Vorrichtung für das Vorentgasen eines Kraftstofftanks nach einem der Ansprüche 7 oder 8, **dadurch gekennzeichnet, dass** das Überwachungs-und-Steuerungs-Modul (6) so ausgelegt ist, dass es mittels eines Kühlsystems die Temperatur des kühlenden Luftstroms auf Basis der von dem wenigstens einen Temperatursensor (15) gemessenen Temperatur steuert.

10. Vorrichtung für das Vorentgasen eines Kraftstofftanks nach einem der Ansprüche 7 - 9, **dadurch gekennzeichnet, dass** das Überwachungs-und-Steuerungs-Modul (6) so ausgelegt ist, dass es die Ausgabe eines optischen und/oder akustischen Warnsignals aktiviert, wenn es erfasst, dass die Temperatur der Filtereinrichtung (5) über einen vorgegebenen Temperatur-Schwellenwert ansteigt.

11. Vorrichtung für das Vorentgasen eines Kraftstofftanks nach einem der vorangehenden Ansprüche,
**dadurch gekennzeichnet, dass** der Querschnitt des Kühlrohrs (10) wenigstens doppelt so groß ist wie der Querschnitt des Einblasrohrs (2).

12. Vorrichtung für das Vorentgasen eines Kraftstofftanks nach einem der vorangehenden Ansprüche,
**dadurch gekennzeichnet, dass** der Querschnitt des Kühlrohrs (10) wenigstens dreimal so groß ist wie der Querschnitt des Einblasrohrs (2).

13. Vorrichtung für das Vorentgasen eines Kraftstofftanks nach einem der vorangehenden Ansprüche,
**dadurch gekennzeichnet, dass** sie so ausgelegt ist, dass der durch die Pumpe (1) der Gruppe aus dem Einblas- (2) und dem Kühlrohr (10) zugeführte Gesamt-Luftstrom 2.400 m³/h beträgt.

14. Verfahren für das Vorentgasen eines Kraftstofftanks mit einer Vorrichtung nach einem der vorangehenden Ansprüche,
**dadurch gekennzeichnet, dass** es umfasst:
- Einblasen eines Luftstroms im Inneren eines Kraftstofftanks (3) mittels einer Pumpe (1) und über ein Einblasrohr (2), das mit einem ersten Stutzen (7) zum Füllen des Tanks (3) verbunden ist, so dass der eingeblasene Luftstrom die inneren Gase des Tanks (3) in Richtung eines zweiten Stutzens (8) zum Entleeren des Tanks (3) drückt, so dass ein verunreinigter Luftstrom erzeugt wird, der durch die treibende Kraft der Pumpe (1) über ein Sammelrohr (4) in Richtung einer Filtereinrichtung (5) gedrückt wird, die wenigstens einen Filter (12) für die Adsorption flüchtiger Brennstoffpartikel enthält;
- Filtern des verunreinigten Luftstroms in der Filtereinrichtung (5);
- Ausstoßen eines sauberen Luftstroms über einen Ausströmweg (9) der Filtereinrichtung;
- Umwälzen eines kühlenden Luftstroms mittels der Pumpe (1) in Richtung der Filtereinrichtung (5), um die Temperatur des wenigstens einen Filters (12) unter einem bestimmten Temperatur-Schwellenwert zu halten.

15. Verfahren für das Vorentgasen eines Kraftstofftanks nach Anspruch 14,
**dadurch gekennzeichnet, dass** es umfasst:
- Überwachen der Konzentration von in dem verunreinigten Luftstrom und in dem sauberen Luftstrom der Filtereinrichtung (5) vorhandener flüchtiger Brennstoffpartikel (5) mittels eines Überwachungs-und-Steuerungs-Moduls (6), das mit Messeinrichtungen (13, 14) für die Konzentration flüchtiger Partikel verbunden ist;
- Überwachen der Temperatur des wenigstens einen Filters (12) mittels des mit dem wenigstens einen Temperatursensor (15) verbundenen Überwachungs-und-Steuerungs-Moduls (6);
- Anweisen der Unterbrechung des Entgasens des Tanks mittels des Überwachungs-und-Steuerungs-Moduls (6), wenn festgestellt wird, dass die Konzentration flüchtiger Partikel in dem verunreinigten Luftstrom unter einen vorgegebenen Konzentrations-Schwellenwert fällt, und
- Steuern des kühlenden Luftstroms mittels des Überwachungs-und-Steuerungs-Moduls (6) auf Basis der von dem wenigstens einen Sensor (15) gemessenen Temperatur des wenigstens einen Filters (12).

## Revendications

1. Dispositif pour le pré-dégazage d'un réservoir de combustible, comprenant une pompe à air (1), un tuyau d'insufflation (2) raccordé à la pompe (1), et un tuyau collecteur (4) raccordé à un filtre (5), dans lequel le dispositif est conçu pour entraîner, au moyen de la pompe (1), un courant d'air à travers le tuyau d'insufflation (2) vers un réservoir de combustible (3), et un courant d'air mélangé avec des gaz internes du réservoir (3), à travers le tuyau collecteur (4), vers l'équipement de filtre (5), dans lequel le dispositif est de plus conçu pour expulser, à travers une voie d'échappement (9) de l'équipement de filtre (5), un courant d'air propre filtré, dans lequel l'équipement de filtre (5) comprend au moins un filtre (12) conçu pour réaliser une adsorption de particules volatiles inflammables des gaz internes du réservoir (3), dans lequel le dispositif est conçu pour raccorder le tuyau d'insufflation (2) à une première buse (7) pour remplir le réservoir (3) et pour raccorder le tuyau collecteur (4) à une seconde buse (8) pour vider le réservoir (3) ; et **caractérisé en ce que** le dispositif comprend un tuyau de refroidissement (10) raccordé à la pompe (1) et à une buse d'entrée (11) de l'équipement de filtre (5), et dans lequel le dispositif est conçu pour entraîner, au moyen de la pompe (1) et à travers le tuyau de refroidissement (10), un courant d'air de refroidissement vers l'équipement de filtre (5).

2. Dispositif pour le pré-dégazage d'un réservoir de combustible, selon la revendication 1, **caractérisé en ce qu'**il comprend un module de surveillance et contrôle (6) conçu pour contrôler le courant d'air transporté à travers le tuyau d'insufflation (2) et à travers le tuyau de refroidissement (10).

3. Dispositif pour le pré-dégazage d'un réservoir de combustible, selon la revendication 2, **caractérisé en ce qu'**il comprend au moins un premier dispositif de mesure de concentration en particule volatile (13), dans lequel ledit premier dispositif de mesure (13) est disposé dans l'équipement de filtre (5) sur le côté correspondant à la voie d'échappement (9) de l'équipement de filtre (5), et dans lequel ledit premier dispositif de mesure (13) est raccordé au module de surveillance et contrôle (6), de sorte que le module de surveillance et contrôle (6) est conçu pour surveiller la concentration en particule volatile de l'écoulement d'air sortant à travers la voie d'échappement (9) de l'équipement de filtre (5).

4. Dispositif pour le pré-dégazage d'un réservoir de combustible, selon la revendication 2, **caractérisé en ce qu'**il comprend au moins un second dispositif de mesure de concentration en particule volatile (14), dans lequel ledit second dispositif de mesure (14) est disposé dans l'équipement de filtre (5) sur le côté correspondant à la buse d'entrée (11) de l'équipement de filtre (5), et dans lequel ledit second dispositif de mesure (14) est raccordé au module de surveillance et contrôle (6), de sorte que le module de surveillance et contrôle (6) est conçu pour surveiller la concentration en particule volatile du courant d'air sale atteignant l'équipement de filtre (5) à travers le tuyau collecteur (4).

5. Dispositif pour le pré-dégazage d'un réservoir de combustible, selon la revendication 4, **caractérisé en ce que** le module de surveillance et contrôle (6) est conçu pour interrompre le fonctionnement du dispositif lorsqu'il détecte que la concentration en particules volatiles mesurée par le second dispositif de mesure de concentration (14) chute sous un seuil de concentration prédéterminé.

6. Dispositif pour le pré-dégazage d'un réservoir de combustible, selon les revendications 3 et 4, **caractérisé en ce que** le module de surveillance et contrôle (6) est conçu pour évaluer l'efficacité de l'équipement de filtre (5) sur la base de la différence entre les concentrations en particules volatiles mesurées par le premier dispositif de mesure (13) et le second dispositif de mesure (14).

7. Dispositif pour le pré-dégazage d'un réservoir de combustible, selon la revendication 2, **caractérisé en ce qu'**il comprend au moins un capteur de température (15), raccordé à l'équipement de filtre (5) et au module de surveillance et contrôle (6), dans lequel le module de surveillance et contrôle (6) est conçu pour surveiller la température du au moins un filtre (12) sur la base des mesures réalisées par le au moins un capteur de température (15).

8. Dispositif pour le pré-dégazage d'un réservoir de combustible, selon la revendication 7, **caractérisé en ce que** le module de surveillance et contrôle (6) est conçu pour augmenter/abaisser le courant d'air de refroidissement sur la base de la température mesurée par le au moins un capteur de température (15).

9. Dispositif pour le pré-dégazage d'un réservoir de combustible, selon l'une quelconque des revendications 7 ou 8, **caractérisé en ce que** le module de surveillance et contrôle (6) est conçu pour contrôler, au moyen d'un système de refroidissement, la température du courant d'air de refroidissement sur la base de la température mesurée par le au moins un capteur de température (15).

10. Dispositif pour le pré-dégazage d'un réservoir de combustible selon l'une quelconque des revendications 7 à 9, **caractérisé en ce que** le module de surveillance et contrôle (6) est conçu pour activer l'émission d'une alarme visuelle et/ou sonore s'il détecte que la température de l'équipement de filtre (5) augmente au-delà d'un seuil de température prédéterminé.

11. Dispositif pour le pré-dégazage d'un réservoir de combustible selon l'une quelconque des revendications précédentes, **caractérisé en ce que** la section du tuyau de refroidissement (10) est au moins le double de la section du tuyau d'insufflation (2).

12. Dispositif pour le pré-dégazage d'un réservoir de combustible selon l'une quelconque des revendications précédentes, **caractérisé en ce que** la section du tuyau de refroidissement (10) est le triple de la section du tuyau d'insufflation (2).

13. Dispositif pour le pré-dégazage d'un réservoir de combustible selon l'une quelconque des revendications précédentes, **caractérisé en ce qu'**il est conçu pour que le courant d'air total introduit par la pompe (1) dans le jeu des tuyaux d'insufflation (2) et de refroidissement (10) soit de 2 400 m³/h.

14. Procédé pour le pré-dégazage d'un réservoir de combustible avec un dispositif selon l'une quelconque des revendications précédentes, **caractérisé en ce qu'**il comprend :
- l'insufflation, au moyen d'une pompe (1) et à travers un tuyau d'insufflation (2) raccordé à une première buse (7) pour remplir un réservoir de combustible (3), d'un courant d'air à l'intérieur du réservoir (3), de sorte que le courant d'air insufflé pousse les gaz internes du réservoir (3) vers une seconde buse (8) pour vider le réservoir (3), formant ainsi un courant d'air sale qui est poussé par la force d'entraînement de la pompe (1) et à travers un tuyau collecteur (4) vers un équipement de filtre (5) incorporant au moins un filtre (12) pour l'adsorption de particules de combustible volatiles ;
- la filtration du courant d'air sale dans l'équipement de filtre (5) ;
- l'expulsion d'un courant d'air propre à travers une voie d'échappement (9) de l'équipement de filtre ;
- la circulation, au moyen de la pompe (1), d'un courant d'air de refroidissement vers l'équipement de filtre (5) pour maintenir la température du au moins un filtre (12) en dessous d'un seuil de température prédéterminé.

15. Procédé pour le pré-dégazage d'un réservoir de combustible selon la revendication 14, **caractérisé en ce qu'**il comprend :
- la surveillance, au moyen d'un module de surveillance et contrôle (6) associé à des dispositifs de mesure de concentration en particules volatiles (13, 14), de la concentration en particules de combustible volatiles présentes dans le courant d'air sale et dans l'écoulement d'air propre de l'équipement de filtre (5) ;
- la surveillance, au moyen du module de surveillance et contrôle (6) associé au au moins un capteur de température (15), de la température du au moins un filtre (12) ;
- la commande, au moyen du module de surveillance et contrôle (6), de l'interruption du dégazage du réservoir, lorsqu'il est déterminé que la concentration en particules volatiles dans le courant d'air sale chute en dessous d'un seuil de concentration prédéterminé, et ;
- le contrôle, au moyen du module de surveillance et contrôle (6), du courant d'air de refroidissement, sur la base de la température du au moins un filtre (12) mesurée par le au moins un capteur (15).
